# EUROPEAN PATENT APPLICATION

(11) **EP 4 821 963 A1**
(43) Date of publication of application: **14.10.2026**
(21) Application number: 25169525.0
(22) Date of filing: 09.04.2025
(51) Int. Cl.: C08G 18/28, C08G 18/32, C08G 18/42, C08G 18/66, C08G 18/76, C09J 175/04

(54) **REVERSIBLE ADHESIVE POLYMER COMPOSITION**

(71) Applicant: Nederlandse Organisatie voor toegepast- natuurwetenschappelijk onderzoek TNO, 2595 DA 's-Gravenhage (NL)
(72) Inventor: HARKEMA, Stephan, 2595 DA 's-Gravenhage (NL); FISCHER, Hartmut Rudolf, 2595 DA 's-Gravenhage (NL); RENTROP, Cornelius Hermanus Arnoldus, 2595 DA 's-Gravenhage (NL); CRAENMEHR, Eric Gerardus Maria, 2595 DA 's-Gravenhage (NL); BURGHOORN, Maria Mathea Antonetta, 2595 DA 's-Gravenhage (NL); KLEMM, Benjamin, 2595 DA 's-Gravenhage (NL)
(74) Representative: V.O.

(57) **Abstract**

The invention is directed to a reversible adhesive polymer composition, an electronic device, a use of a reversible adhesive polymer composition, a method for reversibly adhering at least two components within one or different electronic devices, and a method for separating elements of an electronic device for improved recyclability or repairability.

The reversible adhesive polymer composition comprises polymer chains, said polymer chains comprising relative to 6 units derived from diisocyanate: at least 1 unit derived from dianhydrohexitol, at least 0.2 units derived from polyol comprising at least three hydroxyl moieties, and at least 3 blocks of oligomer diol.

## Description

The invention is in the field of reversible adhesives. In particular the invention is directed to a reversible adhesive polymer composition, an electronic device, a use of a reversible adhesive polymer composition, a method for reversibly adhering at least two components within one or different electronic devices, and a method for separating elements of an electronic device for improved recyclability or repairability.

Recycling and repairing electronic devices is desirable from an economic and environmental perspective. Improving the recyclability or reparability of electronic devices requires the possibility to dismantle the electronic device while maintaining similar processability and reliability for the dismantled device as for the original device. This may be achieved by reversibly adhering components in the electronic device, by using a reversible adhesive.

For example, different components within a traditional electronic device, may be assembled using a reversible adhesive to allow taking apart these components to repair them or recycle them at the end of the device's life cycle, referred to as "debonding-on-demand". This solution may also be attractive for hybrid or printed electronic devices, in which the high level of integration of the different components makes it very difficult take apart the electronics from the original device. This is especially the case for in-mould electronics, a specific type of printed electronics in which the electronic components are fused with plastics, such as polycarbonate.

Ideally, an adhesive used for this purpose should have a high viscosity and adhesion up to certain temperature and exhibit a drop in viscosity above this temperature to allow for dismantling of the electronic device. Different types of electronic devices may come with different requirements in terms of processing and dismantling temperature. Thus, there is a need for a reversible adhesive with high adhesion strength and reliability and a tuneable viscosity to match the application.

Depending on the type of electronic device, the adhesive may also be required to withstand damp heat, thermal shock and thermal loading and/or to be transparent.

In the case of in-mould electronics, the adhesive may also be required to withstand the high temperature at which the electronics are overmoulded, without negatively interacting with or damaging any components in the electronic device.

For the adhesive to be printable, it may additionally be necessary that the adhesive can be dissolved into a low-viscosity solution.

Methods for reversibly adhering components are known in the art.

For example, WO-A-2022/220688 relates to a non-adhesive with a coating design allowing direct adhesion of two adjacent components. Non-adhesives, however, require very careful application and may introduce a weak spot, which may result in delamination, thus reducing reliability.

Other adhesives known in the art are hotmelts, which become gradually softer with increasing temperature. Hotmelts may be tuned towards a certain viscosity profile, but this requires altering and optimisation of the chemistry for each application. In addition, the viscosity of most hotmelts lacks a sudden drop in viscosity above a certain temperature.

Diels-Alder reversible adhesives, for example described by Turkenburg et al. (J. Appl. Polym. Sci. 2017, 134(26), 44972), comprise prepolymers with furfuryl end groups and a bismaleimide crosslinker. Upon crosslinking, a linear polymer chain is obtained that can revert back to its prepolymer segments upon heating. Diels-Alder adhesives based on polyurethanes in particular may be sufficiently flexible, but suffer from a severe drop in viscosity at elevated temperatures, making these adhesives too weak and unreliable at such temperatures.

Reversible adhesives in general may be either too soft to withstand processing and durability tests, or too strongly adhering to enable dismantling. In addition, a softening temperature is generally not properly tuned for specific applications.

It is an object of the present invention to provide a reversible adhesive with high adhesion strength, reliability and tunability that overcomes at least part of the above-mentioned drawbacks.

The inventors surprisingly found that this object can, at least in part, be met by using a polymer composition comprising specific relative amounts of units derived from diisocyanate, units derived from dianhydrohexitol, units derived from polyol comprising at least three hydroxyl moieties and oligomer diol blocks.

Accordingly, in a first aspect, the invention is directed to a reversible adhesive polymer composition, comprising polymer chains, said polymer chains comprising relative to 6 units derived from diisocyanate:
- at least 1 unit derived from dianhydrohexitol,
- at least 0.2 units derived from polyol comprising at least three hydroxyl moieties, and
- at least 3 blocks of oligomer diol

The expressions "units derived from" a component, "units of" a component and component "units" are used herein interchangeably.

The diisocyanate units are linked to the other units and blocks through urethane bonds.

The diisocyanate units contribute to a sufficiently high viscosity of the polymer compositions. The diisocyanate may be an aliphatic diisocyanate and/or an aromatic diisocyanate. Preferably, the diisocyanate comprises or is an aromatic diisocyanate, such as 2,4-toluene diisocyanate, 2,6-toluene diisocyanate, 4,4-diphenylmethane diisocyanate, 2,4-diphenylmethane diisocyanate, 2,2-diphenylmethane diisocyanate, 1,5-naphthalene diisocyanate, 1,4-naphthalene diisocyanate, *o*-xylene diisocyanate, m-xylene diisocyanate, p-xylene diisocyanate, tetramethyl xylene diisocyanate, 4,4-diphenyl ether diisocyanate, 2-nitro-diphenyl-4,4-diisocyanate or any combination thereof. More preferably, the diisocyanate comprises or is a methylene diphenyl diisocyanate (MDI), such as 4,4-diphenylmethane diisocyanate, 2,4-diphenylmethane diisocyanate, 2,2-diphenylmethane diisocyanate, or any combination thereof. Aromatic diisocyanates are preferred in combination with dianhydrohexitol as the urethane bonds formed by these components may undergo reversible reactions at elevated temperatures, such as at a temperature of 100 °C or more.

The dianhydrohexitol may comprise one or more selected from isosorbide, isoidide and isomannide, preferably the dianhydrohexitol comprises one or more selected from isosorbide and isomannide, more preferably the dianhydrohexitol is isomannide. The dianhydrohexitol units allow for a significant reduction in viscosity of the polymer composition above a certain temperature. The viscosity drop is caused by the thermally reversible nature of the anhydroxihexitol-based urethane bond, resulting from destabilisation of this urethane bond due to steric hindrance caused by intramolecular hydrogen bonding. The temperature at which the viscosity drop occurs depends on the specific type of dianhydrohexitol or combination thereof. For instance, when the dianhydrohexitol is isosorbide, the polymer composition will typically show a drop in viscosity in the range of 100 to 140 °C (such as in the range of 110 to 130 °C, or in the range of 115 to 125 °C), and when the dianhydrohexitol is isomannide, the polymer composition will typically show a drop in viscosity in the range of 100 to 140 °C (such as in the range of 110 to 130 °C, or in the range of 115 to 125 °C). Favourably, the choice of a specific type or a specific ratio of isomannide and isosorbide allows for tuning the extent to which the viscosity of the polymer composition will be reduced. The inventors surprisingly found that when isomannide units are incorporated in the polymer, the viscosity profile decreases at a faster rate with increasing temperature as compared to the same amount of isosorbide units. The amount of dianhydrohexitol units relative to 6 units of diisocyanate is preferably from 1 to 5 units, more preferably from 1 to 4 units, even more preferably from 1 to 3 units, and most preferably from 1 to 2 units. Higher amounts of dianhydrohexitol increase the rate of decrease in viscosity. However, if the relative amount of dianhydrohexitol units is too high, then the polymer becomes too rigid causing it to brittle after application, hence non-favourable conditions for flexible electronics applications.

The units derived from polyol comprising at least three hydroxyl moieties in the polymer chains can result in the formation of crosslinks between different polymer chains resulting in a polymer network, thereby increasing the viscosity and stability of the polymer composition. Preferably, the polyol is a triol. Suitable triols include glycerol, 1,1,1-tris(hydroxymethyl)propane, 1,1,1-tris(hydroxymethyl)ethane, and 1,2,4-bezenetriol. The amount of polyol units relative to 6 units of diisocyanate is preferably from 0.2 to 0.8, more preferably from 0.2 to 0.4, even more preferably from 0.2 to 0.3. If the relative amount of polyol units is too high, then the polymer becomes insoluble in application relevant solvents and hence non-processible.

The blocks of oligomer diol in the polymer contribute to high adhesion of the polymer composition. The oligomer diol block preferably comprises a polyester diol, a polyether diol, a polycarbonate diol or a hydrocarbon diol. Examples of suitable oligomer diols include one or more of poly(ε-caprolactone) diol, poly(D,L-lactide) diol, poly(L,L-lactide) diol, poly(3-hydroxybutyrate) diol, polyethylene butylene adipate diol, polyethylene adipate diol, polybutylene adipate diol, polyhexane adipate diol, polycarbonate diol, polyphthalate diol, polyneopentyl adipate diol, polyethylene adipate monopropylene glycol ester diol, polyethylene adipate diacetate diol, polyethylene adipate diacetate diol, polytetrahydrofuran diol, polyoxypropylene diol, and tetrahydrofuran-oxypropylene copolymer diol, more preferably polycaprolactone diol. Each block preferably has a molecular weight of from 250 g/mol to 10 000 g/mol, more preferably from 600 to 5000 g/mol, even more preferably from 1250 to 2000 g/mol. The amount of oligomer diol blocks (preferably polycaprolactone diol) relative to 6 units of diisocyanate is preferably from 3 to 12 units, more preferably from 4 to 8 units, even more preferably from 4 to 6 units. The use of smaller oligomer diol units result in stiffer adhesives with higher viscosities than the use of larger oligomer diol units.

The polymer is a statistical copolymer of diisocyanate units and oligomer diol, dianhydrohexitol, and units derived from polyol comprising at least three hydroxyl moieties, linked together through urethane bonds. The polymer may have a branched and/or crosslinked structure due to the presence of the units derived from polyol comprising at least three hydroxyl moieties.

In addition to the thermally reversible chemistry based on the dianhydrohexitol units, another type of thermally reversible chemistry may be used in order to further tune the properties of the polymer composition. Specifically, Diels-Alder moieties may be introduced into the polymer composition. Diels-Alder chemistry is based on the combination of furan and maleimide moieties, acting as diene and dienophile respectively. The polymer chains may comprise from 0.1 to 1, preferably from 0.1 to 0.5, more preferably from 0.2 to 0.3 furan and/or maleimide moieties, relative to 6 units of diisocyanate. Amounts of Diels-Alder moieties of less than 0.1 relative to 6 units of diisocyanate may not yield a desired decrease in the viscosity profile over temperature. These moieties are preferably included as end groups of the polymer chains. The implementation of Diels-Alder units allows to further regulate the rate of viscosity decrease and hence enables additional control over viscosity profile.

In addition to polymer chains comprising furan and/or maleimide moieties, the polymer composition may further comprise a multifunctional (such as bifunctional or trifunctional) crosslinker with a complementary Diels-Alder moiety, *i.e.* a difuran crosslinker if the polymer chains comprise maleimide moieties and/or a bismaleimide crosslinker if the polymer chains comprise furan moieties.

The crosslinker may be aliphatic or aromatic. Preferably, the crosslinker is an aliphatic crosslinker, because this type of crosslinker was found to give fewer side reactions during crosslinking. Suitable aliphatic bismaleimide crosslinkers include 1,6-bismaleimido(2,2,4-trimethyl)hexane (THC), 1,1'-(hexane-1,6-diyl)bis(1*H*-pyrrole-2,5-dione), 1,4-*bis*(maleimido)butane, 1,2-*bis*(maleimido)ethane and 1,6-*bis*(maleimido)hexane. Suitable aliphatic difuran crosslinkers include 1,3-di-2-furanyl-1,3-propanediol and 4,6-di-2-furanyl-2,2-dimethyl-1,3-dioxane. The amount of Diels-Alder moieties in the polymer chain influences the drop in viscosity: if the relative amount compared to six units of diisocyanate is too high, *i.e.* above ten, then the decrease in viscosity is too large, resulting in a too soft material.

The Diels-Alder moieties in the polymer chain can be reacted with the crosslinker in order to obtain a polymer composition comprising crosslinked polymer chains. The polymer composition without Diels-Alder moieties may comprise or essentially consist of polymer chains which can schematically be represented by formula (Ia) 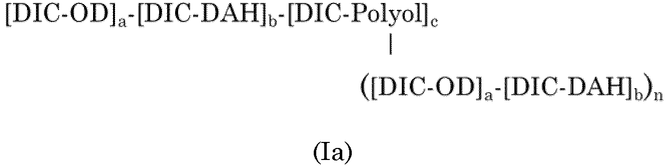 wherein DIC represents a diisocyanate unit, OD represents a oligomer diol unit, DAH represents a dianhydrohexitol unit and polyol represents a unit derived from polyol comprising at least three hydroxyl moieties, wherein a, b and c indicate the relative amounts of the different units, and wherein all values of a together equal to 3-12, preferably 4-10, more preferably 4-8, even more preferably 4-6,
all values of b together equal to 1-5, preferably 1-4, more preferably 1-3, even more preferably 1-2,
c equals to 0.2-0.8, preferably 0.2-0.6, more preferably 0.2-0.4, even more preferably 0.2-0.3, and
n represents the number of hydroxyl groups in the polyol minus 2. For example, when the polyol is a triol, n is 1.

The polymer composition without Diels-Alder moieties may comprise or essentially consist of polymer chains which can be further schematically shown by formula (Ib) 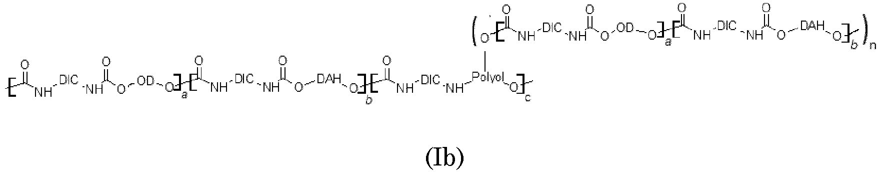 wherein DIC, OD, DAH, Polyol, a, b and c and n are each defined as for formula (Ia) above.

The polymer composition with Diels-Alder moieties as end groups may comprise or essentially consist of polymer chains which can schematically be represented by formula (IIa) 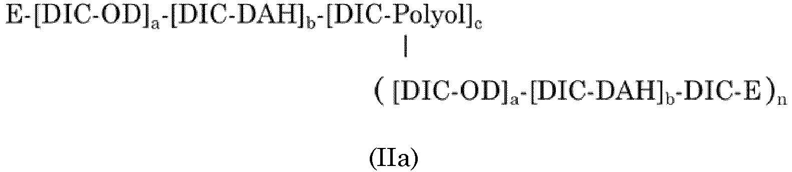 wherein E represents a Diels-Alder moiety end group, and wherein DIC, OD, DAH, Polyol, a, b, c and n are each as defined above.

The polymer composition with Diels-Alder moieties may comprise or essentially consist of polymer chains which can be further schematically shown in formula (IIb) 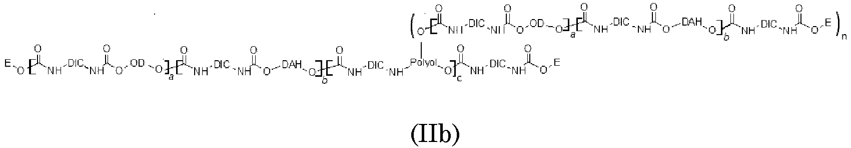 wherein E, DIC, OD, DAH, Polyol, a, b, c and n are each as defined above.

It may be appreciated that in formulae (Ia)-(IIb), the [DIC-OD], [DIC-DAH] and [DIC-Polyol] units are randomly distributed over the polymer structure. In addition, although in formula (Ia)-(Ic) the end groups of the polymer chains are not defined, it is preferred that the polymer chains end with any of OD, DAH, Polyol, not DIC.

The present inventors found that a reversible adhesive suitable for use in electronic devices should preferably exhibit a certain viscosity at temperatures relevant for processability, reliability during operation and dismantlability. The viscosity can be measured by rheometry using a rheometer, or by a viscometer.

The viscosity of the reversible adhesive polymer composition is preferably high up to slightly elevated temperatures, such as 60 °C, in order to guarantee good adhesive strength during use of the electronic device. Accordingly, the adhesive polymer compositions preferably exhibit a viscosity at 60 °C of from 1 to 1000 kPa·s, more preferably from 5 to 500 kPa·s, even more preferably from 10 to 250 kPa·s.

The polymer composition ideally shows a sudden drop in viscosity above a certain temperature. This temperature can be tuned by changing the type and relative amounts of components of the polymer chains, in particular the type of dianhydrohexitol. The rate at which the viscosity drops with temperature also depends on the type and relative amounts of components in the polymer composition, in particular on the presence and relative amounts of Diels-Alder moieties. A higher relative amount of Diels-Alder moieties with respect to diisocyanate units will generally results in a larger drop in viscosity.

While this drop in viscosity is necessary for achieving a suitably low viscosity for dismantling, it is preferred that the reversible adhesive polymer composition exhibits a minimal viscosity at a temperature of 110 °C. Accordingly, the adhesive polymer composition preferably exhibits a viscosity at 110 °C of from 1 to 500 kPa·s, more preferably from 3 to 250 kPa·s, even more preferably from 5 to 100 kPa·s.

The reversible adhesive preferably further exhibits a viscosity at 160 °C of from 0.5 to 250 kPa·s, more preferably from 1 to 125 kPa·s, even more preferably from 2 to 50 kPa·s. Reversible adhesives with a viscosity in this range may be particularly suitable for application where the reversible adhesive needs to be overmouldable at high temperatures. For example, the reversible adhesives may be able to survive an injection moulding step with hot polycarbonate that is injected at around 300 °C.

Additionally, the reversible adhesive can preferably be dissolved into a low viscosity solution, as this allows for printing of the reversible adhesive, such as by screen printing. When dissolved, the reversible adhesive preferably exhibits a viscosity at 20 °C of 100 Pa·s or less, such as 70 Pa·s or less, or from 1 to 40 Pa·s. Viscosity can, for example, be measured at 20 °C on a Brookfield viscometer. When printed, the reversible adhesives may achieve a transparent layer, which allows for embedding invisible in transparent devices or to be combined in combination with light emissive or receiving optoelectronic devices.

In a further aspect, the invention is directed to an electronic device comprising a reversible adhesive polymer composition according to the invention.

The reversible adhesive polymer composition may advantageously be used in a variety of dissimilar types of electronics, due to the tuneable viscosity of the composition. The composition may be particularly suitable to be used in hybrid or printed electronic devices, such as flexible electronics and in-mould electronics, but also in applications from other domains in need of tuneable reversible adhesives, such as solar cells.

In yet a further aspect, the invention is directed to the use of a reversible adhesive polymer composition according to the invention for reversibly adhering components in an electronic device or for reversibly adhering an electronic device to a surface. The components may be comprised of semiconducting chips, light emitting diodes, capacitors, resistors and other typical elements necessary to create a functional electrical device.

Preferably, the device is a hybrid or printed electronic device, more preferably an in-mould electronic device.

In-mould electronic devices are hybrid and printed electronic devices that comprise a thermoplastic substrate, a printed circuitry, hybrid components, and a thermoplastic backside filling. The thermoplastic substrate and/or backside filling are typically made of polycarbonate. Nonetheless, other thermoplastic materials can be used as well, including polymethylmethacrylate (PMMA), thermoplastic polyurethane (TPU), polyvinyl butyral (PVB), polyethylene terephthalate (PET), polyimide (PI) and/or polyethylene naphthalate (PEN).

In the case of in-mould electronics, the reversible adhesive polymer composition according to the invention may be used to reversibly adhere any of the components, preferably the thermoplastic backside filling, such as a polycarbonate backside filling, and the printed circuitry and hybrid components.

In yet a further aspect, the invention is directed to a method for reversibly adhering at least one component within an electronic device, said method comprising the steps of:
i) adhering the at least one component onto another component within an electronic device using a reversible adhesive according to the invention, preferably onto a circuitry of the electronic device;
ii) optionally overmoulding the product of step i) with a thermoplastic polymer layer; and
iii) optionally coating the product of steps i) or ii) with one or more cross-linkable plastics or composites.

The at least one component in step i) may for example comprise semiconducting chips, light emitting diodes, capacitors, resistors or other typical elements necessary to create a functional electrical device. The component may also be the thermoplastic layer of step ii). The reversible adhesive according to the invention may suitably be applied by (screen) printing or coating.

The thermoplastic polymer layer in step ii) is preferably a layer comprising one or more of polycarbonate (PC), polyethylene naphthalate (PEN), acrylonitrile butadiene styrene (ABS), polyethylene (PE), polypropylene (PP), and polystyrene (PS), preferably one or more of polycarbonate (PC) and polyethylene naphthalate (PEN), more preferably the thermoplastic polymer comprises or is polycarbonate. The overmoulding in step ii) preferably takes place at a pressure and temperature at which the thermoplastic polymer has a sufficiently low viscosity, such as at a pressure of 200 bar or more and a temperature of 200 °C or more. The overmoulding can suitable be carried out by injection moulding.

In yet a further aspect, the invention is directed to a method for separating elements of an electronic device for improved recyclability or repairability, the electronic device comprising a reversible adhesive polymer composition according to the invention, the method comprising at least the steps of:
i) heating the reversible adhesive polymer composition specifically, or the electronic device as a whole, to a temperature at which the reversible adhesive polymer composition substantially softens and preferably exhibits an adhesive strength of preferably < 10 N/cm, more preferably < 5 N/cm, even more preferably < 2 N/cm; and
ii) separating one or more components from the electronic device manually or by machine; and
   optionally
iii) placing separated components in appropriate waste streams; and/or
iv) applying repairing, refurbishment or similar actions to reconstitute defective elements of electronic circuitry, optionally followed by
   - re-application of additional reversible adhesive polymer if needed; and/or
   - re-application of one or more components.

The temperature at which the reversible adhesive polymer is heated in step i) may be from 100 to 180 °C, such as from 100 to 160 °C, from 110 to 140 °C, from 110 to 130 °C, or from 115 to 125 °C.

The adhesive strength may be measured in accordance with the so-called T peel test in accordance with ASTM D1876.

The invention has been described by reference to various embodiments, and methods. The skilled person understands that features of various embodiments and methods can be combined with each other.

All references cited herein are hereby completely incorporated by reference to the same extent as if each reference were individually and specifically indicated to be incorporated by reference and were set forth in its entirety herein.

The use of the terms "a" and "an" and "the" and similar referents in the context of describing the invention (especially in the context of the claims) are to be construed to cover both the singular and the plural, unless otherwise indicated herein or clearly contradicted by context. The terms "comprising", "having", "including" and "containing" are to be construed as open-ended terms (*i.e.,* meaning "including, but not limited to") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein. Variation of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject-matter recited in the claims appended hereto as permitted by applicable law. Moreover, any combination of the above-described elements in all possible variations thereof is encompassed by the invention unless otherwise indicated herein or otherwise clearly contradicted by context. The claims are to be construed to include alternative embodiments to the extent permitted by the prior art.

For the purpose of clarity and a concise description features are described herein as part of the same or separate embodiments, however, it will be appreciated that the scope of the invention may include embodiments having combinations of all or some of the features described.

The invention will be further illustrated by the following non-limiting examples.

### Examples

### Example 1 - Synthesis

### Reversible adhesive polymer composition without Diels-Alder moieties

Polycaprolactone diol having a molecular weight of 550 g/mol (5.0-15.0 g, 0.01-0.03 mol, [OD] 3.0-9.0 eq.) was mixed together with glycerol having a molecular weight of 92.09 g/mol ([Polyol], 0.2-0.3 eq.), isosorbide ([DAH], 1.1-1.3 eq.) and methylene diphenyl diisocyanate ([DIC], 5.0-6.0 eq.) under neat conditions in an glass container (80 ml). The mixture was set in the oven at 100 °C for 10-30 minutes and hereafter stirred vigorously with an spatula to dissolve all components. After an homogenous solution had been established, the mixture was left at 100 °C for 2-2.5 hours to obtain the prepolymer/polymer with [PCL], [Polyol] and [DAH] repeating polyurethane units of [DIC]/[PCL], [DIC]/[DAH] and partial crosslinking due to the presence of [DIC]/[Polyol] units. The polymer melt was then poured on release paper and cooled to room temperature before being transferred into a steel container and exposed to liquid nitrogen. The obtained polymer was used without further purification.

### Reversible adhesive polymer composition with Diels-Alder moieties.

Polycaprolactone diol having a molecular weight of 550 g/mol (5.0-15.0 g, 0.01-0.03 mol, [PCL] 3.0-4.0 eq.) was mixed together with furfuryl alcohol ([E], 0.05-2.0 eq.), glycerol ([Polyol], 0.2-0.3 eq.), isosorbide ([DAH], 1.1-1.3 eq.) and methylene diphenyl diisocyanate ([DIC], 5.0-6.0 eq.) under neat conditions in an glass container (80 ml). The mixture was set in the oven at 100 °C for 10-30 min and hereafter stirred vigorously with an spatula to dissolve all components. After an homogenous solution had been established, the mixture was left at 100 °C for 2-2.5 hours to obtain the prepolymer/polymer with [PCL], [Polyol] and [DAH] repeating polyurethane units of [DIS]/[PCL], [DIS]/[DAH], partial crosslinking and end-capped with furan units enabling chain-extension via cycloaddition with 1,6-bismaleimide(2,2,4-trimethyl)hexane linkers. The polymer melt (without Diels-Alder units) was then poured on release paper and cooled to room temperature before transferred into a steel container and exposed to liquid nitrogen. The obtained polymer was used without further purification.

The prepolymer (obtained in the glass container) was placed in an oil bath at 130-150 °C. Once the reaction temperature had been reached and the prepolymer melt decreased in viscosity, bismaleimide was added in small batches, stirred and this process was repeated until all crosslinker was added into the melt. The melt was then poured on release paper and cooled to room temperature before transferred into a steel container and exposed to liquid nitrogen. The obtained polymer was used without further purification.

### Example 2 - Viscosity

### Reversible adhesives polymer compositions with varying polycaprolactone and dianhydrohexitol content

Polymer compositions were synthesised according to the method of Example 1 with varying amounts of dianhydrohexitol units, triol units and polycaprolactone diol blocks. The viscosities of these compositions were measured at 60 °C, 110 °C, 120 °C for BK54, and 160 °C by rheology using an Anton Paar rheometer. The results are shown in Table 1.

**Table 1**

| | | | | | | | Viscosity (Pa·s) | | | |
|---|---|---|---|---|---|---|---|---|---|---|
| BK | MDI | CAPA | ISO | GLY | DA | CrossL | 60 °C | 110 °C | 120 °C | 160 °C |
| 43 | 6 | 4 | 1 | 0.2 | 0 | none | 3.5×10⁴ | 4.7×10³ | n.d. | 2.2×10³ |
| 54 | 6 | 4 | 1 | 0.25 | 0 | none | 1.3×10⁵ | 2.7×10⁴ | 1.9×10⁴ | 5.2×10³ |
| 55 | 6 | 4 | 1 | 0.3 | 0 | none | 1.1×10⁵ | 1.4×10⁴ | n.d. | 2.0×10³ |
| 46 | 6 | 3 | 1 | 0.2 | 0 | none | 3.5×10⁴ | 2.7×10³ | n.d. | 1.1×10³ |
| 47 | 6 | 3 | 1 | 0.3 | 0 | none | 5.7×10⁴ | 2.1×10⁴ | n.d. | 1.2×10⁴ |

### Reversible adhesives polymer compositions with varying Diels-Alder end group and crosslinker content

Polymer compositions were synthesised according to the method of Example 1 with varying amounts of Diels-Alder end groups. The viscosities of the crosslinked compositions were measured at 60 °C, 110 °C, 120 °C for some of the compositions and 160 °C by rheology. The results are shown in Table 2.

**Table 2**

| | | | | | | | Viscosity (Pa·s) | | | |
|---|---|---|---|---|---|---|---|---|---|---|
| BK | MDI | CAPA | ISO | GLY | DA | CrossL | 60 °C | 110 °C | 120 °C | 160 °C |
| 49 | 6 | 4 | 1 | 0.2 | 0.03 | BMI-THC | 5.5×10⁴ | 2.0×10⁴ | 1.4×10⁴ | 3.2×10³ |
| 50 | 6 | 4 | 1 | 0.2 | 0.08 | BMI-THC | 7.1×10⁴ | 1.2×10⁴ | n.d. | 1.5×10³ |
| 51 | 6 | 4 | 1 | 0.2 | 0.15 | BMI-THC | 4.6×10⁴ | 1.1×10⁴ | 6.9×10³ | 1.1×10³ |
| 44 | 6 | 4 | 1 | 0.2 | 0.25 | BMI-THC | 5.4×10⁴ | 4.7×10³ | n.d. | 2.2×10² |
| 45 | 6 | 4 | 1 | 0.2 | 0.5 | BMI-THC | 5.9×10⁴ | 1.8×10³ | n.d. | 6.1×10¹ |
| 17 | 6 | 4 | 1 | 0.2 | 1 | BMI-THC | 4.3×10⁴ | 1.1×10³ | 3.5×10² | 8.7 |

### Comparative Example 2 - Viscosity

The viscosities of two commercially available hotmelts were measured at 60 °C and 120 °C by rheology. Hotmelt 1 was Micromax^{™} PE773, obtained from DuPont. Hotmelt 2 was Kiwotherm L 110, obtained from KIWO, Inc. The results are shown in Table 3.

**Table 3**

| hotmelt | η_{60 °C} (Pa·s) | η_{110 °C} (Pa·s) | η_{160 °C} (Pa·s) |
|---|---|---|---|
| 1 | 5.5×10⁴ | 2.0×10⁴ | 3.2×10³ |
| 2 | 7.1×10⁴ | 1.2×10⁴ | 1.5×10³ |

### Example 3 - Effect of Diels-Alder units on the viscosity profile

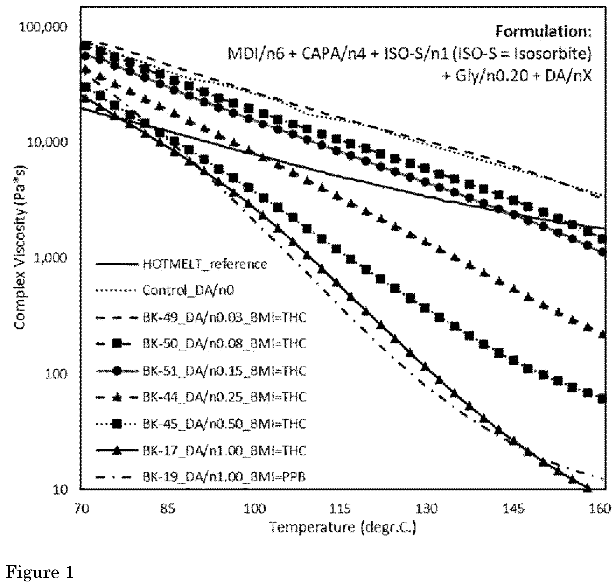

Polymer compositions were synthesised according to the method of Example 1 with variation in Diels-Alder units. Complex viscosity versus temperature measurements were performed on an Anton Paar rheometer. As comparisons, a conventional hotmelt reference was used, as well as a polyurethane hotmelt reference without Diels-Alder units. The results are shown in Figure 1.

Figure 1 demonstrates that with the incorporation of Diels-Alder units in the polyurethane adhesive (having per 6 units of methyl diphenyl diisocyanate, 4 units of ε-caprolactone diol, 1 units of isosorbide and 0.20 units of glycerol) the rate of viscosity drop over temperature can be controlled. For BK49 (having 0.03 Diels-Alder units per 6 units of diisocyanate) no change in viscosity profile over temperature was observed as compared to the reference polyurethane with no Diels-Alder units. The inventors believe that the amount of Diels-Alder units in the polymer is too low to have a significant effect on the viscosity profile. Increasing the amount of Diels-Alder units to levels higher than 0.03 per 6 units of diisocyanate results in a decrease in the viscosity profile over temperature as compared to the polyurethane reference without Diels-Alder units. Varying the Diels-Alder crosslinker (THC or PPB) shows no (significant) difference on the viscosity profile verses temperature at constant Diels-Alder units. The chemical structures of THC and PPB are as follows.

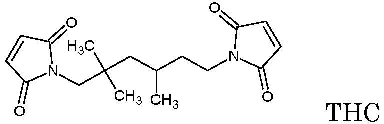

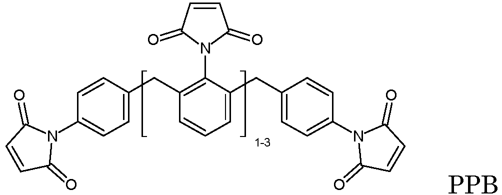

### Example 4 - Effect of dianhydrohexitol units on viscosity profile

Polymer compositions were synthesised according to the method of Example 1 with variation in dianhydrohexitol units. Complex viscosity versus temperature measurements were performed on an Anton Paar rheometer. As comparisons, a conventional hotmelt reference was used, a polyurethane hotmelt reference without Diels-Alder units and without dianhydrohexitol units and having 0.25 triol units and 3 oligomer diol units per 6 units of diisocyanate, and a polyurethane hotmelt reference without Diels-Alder units and without dianhydrohexitol units hand having 0.25 triol units and 4 oligomer diol units.

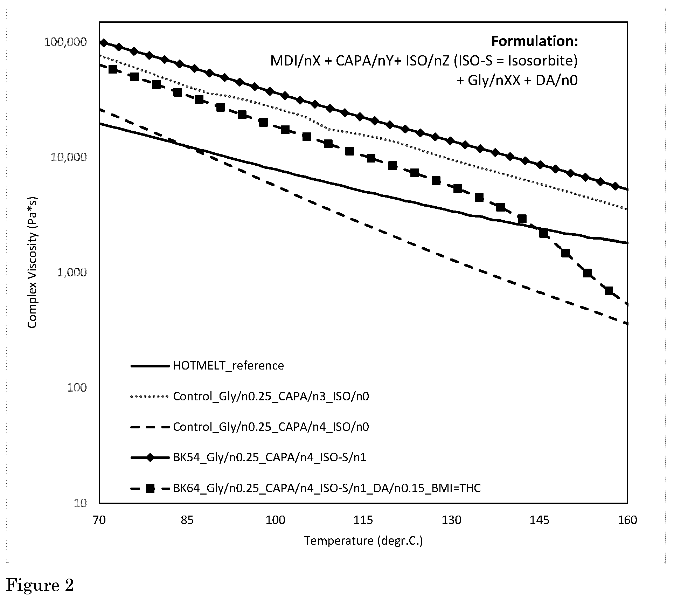

The effect of the presence of isosorbide units and the presence of both isosorbide together with Diels-Alder units on the complex viscosity over temperature was evaluated. The results are shown in Figure 2. This figure shows that that the viscosity profile of polyurethane adhesive incorporating having isosorbide units decreases at a similar rate with increasing temperature as compared to the reference polyurethane adhesive without isosorbide units. The rate of viscosity decrease can be increased by implementation of Diels-Alder units for the polyurethane adhesive, which enables additional control over viscosity profile (rate change at about 135 °C). It is further observed that the adhesive having 3 units of ε-caprolactone oligomer diol relative to 6 units of diisocyanate is stiffer with higher viscosity as compared to the adhesive having 4 units of ε-caprolactone oligomer diol relative to 6 units of diisocyanate at constant amount of glycerol triol of 0.25 units relative to 6 units of diisocyanate.

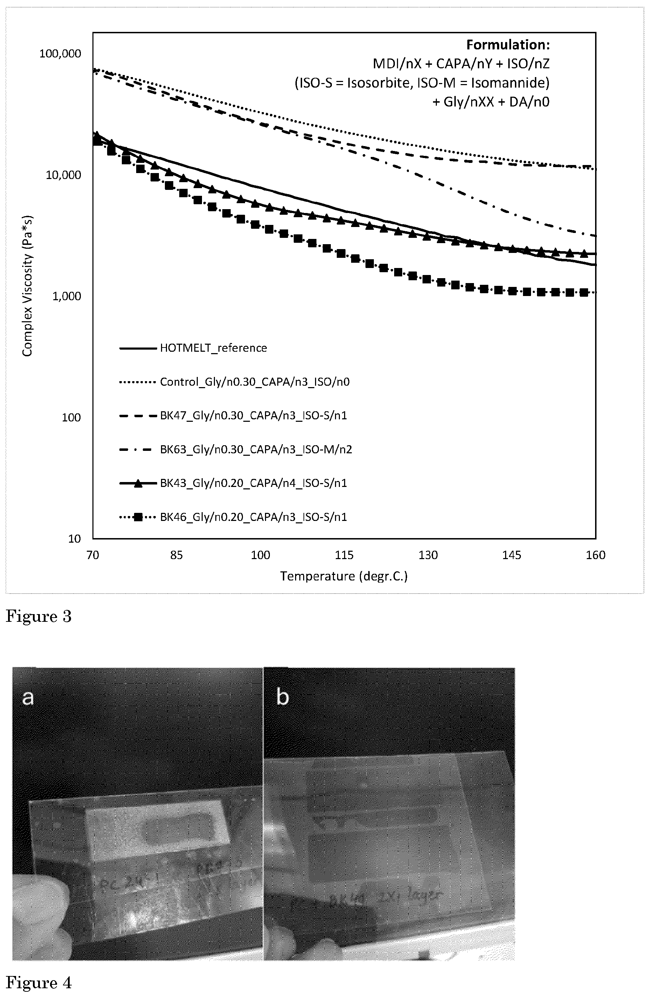

In a further experiment, the effect of isosorbide units versus isomannide units on the complex viscosity versus temperature was studied. As comparisons, a conventional hotmelt reference was used, as well as a polyurethane hotmelt reference without Diels-Alder units and without dianhydrohexitol units and having 0.30 triol units and 3 oligomer diol units per 6 units of diisocyanate. The results are shown in Figure 3. This figure demonstrates that the viscosity profile of polyurethane adhesive incorporating isomannide units decreases at a faster rate with increasing temperature as compared to the same polyurethane adhesive with isosorbide units (comparing BK47 and BK62).

The rate of decrease in viscosity can be further increased by implementation of more isomannide units (BK63) for the polyurethane adhesive (larger rate change at about 130 °C, as compared to BK62). A lower amount of glycerol triol units (n = 0.20) in the polyurethane adhesive enables a viscosity drop (at about 110 °C as compared to stiffer polyurethanes with a higher amount of glycerol triol units (n = 0.30) where the change in viscosity is observed at higher temperatures (T = 135 °C).

The results suggest that at a lower amount of triol units, disentanglement is less prominent enabling viscosity drop due to carbamate opening at lower temperatures as compared to stiffer materials with a higher amount of triol units where the effect of carbamate opening is observed at higher temperatures as the polymer is governed by disentanglement before the impact of carbamate opening becomes observable.

### Example 5 - Adhesion strength

Polymer compositions were synthesised according to the method of Example 1 with varying amounts of Diels-Alder end groups. The adhesion strength of the crosslinked compositions were measured by T-peel test on different substrates; polycarbonate (PC), polycarbonate covered with a graphic layer (PC + graphic layer) and polyethylene terephthalate (PET). The results are shown in Table 4.

**Table 4**

| | | | | | | | Adhesion strength (N/cm) | | |
|---|---|---|---|---|---|---|---|---|---|
| BK | MDI | CAPA | ISO | GLY | DA | CrossL | PC | PC + graphic layer | PET |
| 54 | 6 | 4 | 1 | 0.25 | 0 | none | 1.0×10¹ | 1.3 | 6 |
| 17 | 6 | 4 | 1 | 0.2 | 1 | BMI-THC | 1.0×10¹ | 1.7 | 10 |
| 49 | 6 | 4 | 1 | 0.2 | 0.03 | BMI-THC | 1.0×10¹ | 1.0 | 9 |
| 51 | 6 | 4 | 1 | 0.2 | 0.15 | BMI-THC | 1.4×10¹ | 1.1 | 10 |

### Comparative Example 5 - Adhesion strength

The adhesion strength of two commercially available hotmelts were measured by T-peel test. The results are shown in Table 5.

**Table 5**

| | Adhesion strength (N/cm) | | |
|---|---|---|---|
| Hotmelt | PC | PC + graphic layer | PET |
| 1 | 5.0×10⁻¹ | 1.9 | 12 |
| 2 | 5.0×10¹ | 7.0 | 10 |

### Example 6 - Reliability test

A polymer composition according to the invention (BK49), comprising relative amounts of units 0.1-1.0, number of Diels-Alder moieties was tested for its printability, flexibility, reliability and transparency and compared to a commercially available hotmelt. The polymer composition according to the invention resulted in a perfectly clear layer between the two PC foils that was able to survive more than 400 hours in damp heat at a temperature of 85 °C and 85 % relative humidity (Figure 4a). On the other hand, the commercially available hotmelt showed fingering instabilities caused by a too low viscosity under the same conditions (Figure 4b).

### Example 7 - reliability test for in-mould electronics

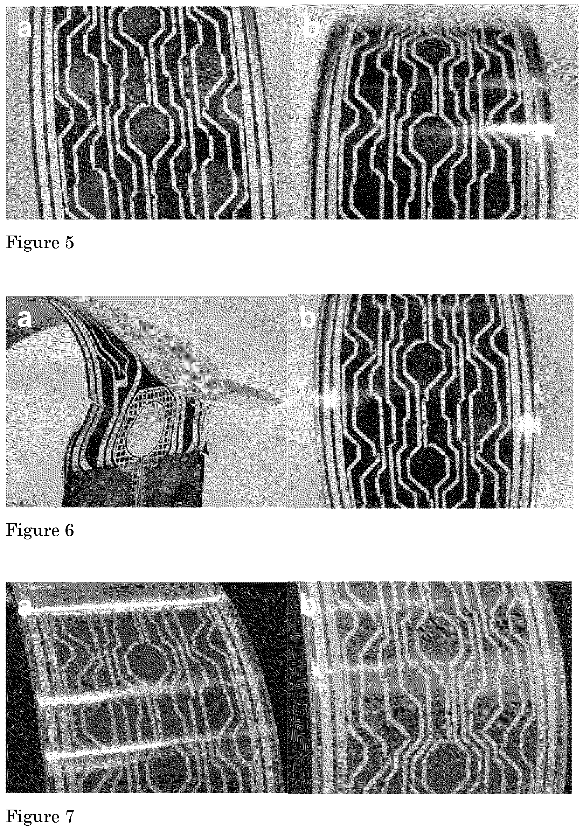

Onto a substrate with circuitry, components and adhesive according to the invention (BK55), a polycarbonate encapsulation is provided by overmoulding at 300 °C and moulding pressures between 300 and 500 bars. A reference hotmelt revealed large spots with local delamination or dismantled fully under either conditions for climate chamber test (85 °C, 85 % relative humidity during 1000 hours) (Figure 5a) or high temperature exposure at 110 °C for 270 hours (Figure 6a). The reversible adhesive of the invention showed good performance under either conditions for climate chamber test (85 °C, 85 % relative humidity during 1000 hours) (Figure 5b) or high temperature exposure at 110 °C for 270 hours (Figure 6b).

### Example 8 - Electrical Reliability test for in-mould electronics

Onto a substrate with circuitry, LEDs and adhesive according to the invention (BK54), a polycarbonate encapsulation is provided by overmoulding at 300 °C and moulding pressures between 300 and 500 bars. The reliability of the resulting device was tested under conditions for climate chamber tests (85 °C, 85 % relative humidity during 300 hours) in duplicate (Figures 7a and 7b). The device did not show any signs of delamination, whereas defects usually appear within 24-72 hours when using weaker adhesives. The illumination of the LEDs comprised in the device were tested at t = 0 and t = 300 h. There was no noticeable change in illumination, indicating that there was no negative influence of the adhesive on the circuitry or any other components during the climate chamber testing.

### Example 9 - Electrical performance test (yield of functional LEDs)

Onto a substrate with circuitry, LEDs and adhesive according to the invention (BK54), a polycarbonate encapsulation is provided by overmoulding at 300 °C and moulding pressures between 300 and 500 bars.

The yield of functional LEDs in the resulting device was determined to be 90 %.

The yield of functional LEDs is defined as the percentage of functional LEDs with respect to the total amount of LEDs present in the device. During overmoulding, the components in the electrical device experience high pressure and temperature. The yield of functional LEDs is a measure of the reliability of the adhesive. A too weak adhesive, resulting in delamination, or an adhesive with a too low viscosity, resulting in the adhesive flowing away with the polycarbonate, both result in a damaged device and a reduced yield of functional LEDs.

### Comparative Example 9 - Electrical performance test (yield of functional LEDs)

Onto a substrate with circuitry, LEDs and a hotmelt, a polycarbonate encapsulation is provided by overmoulding at 300 °C and moulding pressures between 300 and 500 bars.

The yield of functional LEDs in the resulting device was determined to be 0 %.

## Claims

1. A reversible adhesive polymer composition, comprising polymer chains, said polymer chains comprising relative to 6 units of a diisocyanate:
- at least 1 unit derived from dianhydrohexitol;
- at least 0.2 units derived from polyol comprising at least three hydroxyl moieties; and
- at least 3 blocks of oligomer diol.

2. A reversible adhesive polymer composition according to claim 1, wherein the polymer chains comprise relative to 6 units of diisocyanate
- from 1 to 5 units, preferably from 1 to 3 units, more preferably from 1 to 2 units of dianhydrohexitol; and/or
- from 0.2 to 0.8 units, preferably from 0.2 to 0.4 units, more preferably from 0.2 to 0.3 units of polyol comprising at least three hydroxyl moieties; and/or
- from 3 to 12 units, preferably from 4 to 8 units, more preferably from 4 to 6 units of oligomer diol.

3. A reversible adhesive polymer composition according to claim 1 or 2, wherein the dianhydrohexitol comprises one or more selected from isosorbide, isoidide, and isomannide, preferably one or more selected from isosorbide and isomannide, more preferably, the dianhydrohexitol comprises or is isomannide.

4. A reversible adhesive polymer composition according to any one of claims 1-3, wherein the diisocyanate comprises an aromatic diisocyanate, preferably selected from the group consisting of 2,4-toluene diisocyanate, 2,6-toluene diisocyanate, 4,4-diphenylmethane diisocyanate, 2,4-diphenylmethane diisocyanate, 2,2-diphenylmethane diisocyanate, 1,5-naphthalene diisocyanate, 1,4-naphthalene diisocyanate, o-xylene diisocyanate, m-xylene diisocyanate, p-xylene diisocyanate, tetramethyl xylene diisocyanate, 4,4-diphenyl ether diisocyanate, 2-nitro-diphenyl-4,4-diisocyanate or any combination thereof, more preferably the diisocyanate is a methylene diphenyl diisocyanate (MDI), such as 4,4-diphenylmethane diisocyanate, 2,4-diphenylmethane diisocyanate, 2,2-diphenylmethane diisocyanate or any combination thereof.

5. A reversible adhesive polymer composition according to any one of claims 1-4, wherein the polyol comprising at least three hydroxyl moieties is a triol, preferably the polyol comprising at least three hydroxyl moieties comprises one or more selected from glycerol, 1,1,1-tris(hydroxymethyl)propane, 1,1,1-tris(hydroxymethyl)ethane, and/or 1,2,4-bezenetriol, more preferably the polyol comprising at least three hydroxyl moieties comprises or comprises or is glycerol.

6. A reversible adhesive polymer composition according to any one of claims 1-5, wherein the blocks of oligomer diol are derived from one or more selected from the group consisting of poly(ε-caprolactone) diol, poly(D,L-lactide) diol, poly(L,L-lactide) diol, poly(3-hydroxybutyrate) diol, polyethylene butylene adipate diol, polyethylene adipate diol, polybutylene adipate diol, polyhexane adipate diol, polycarbonate diol, polyphthalate diol, polyneopentyl adipate diol, polyethylene adipate monopropylene glycol ester diol, polyethylene adipate diacetate diol, polyethylene adipate diacetate diol, polytetrahydrofuran diol, polyoxypropylene diol, and tetrahydrofuran-oxypropylene copolymer diol, preferably the blocks of oligomer diol are derived from polycaprolactone diol.

7. A reversible adhesive polymer composition according to any one of claims 1-6, wherein the blocks of oligomer diol comprise from 1 to 12 oligomer diol units, more preferably from 2 to 8 oligomer diol units, even more preferably from 3 to 5 of oligomer diol units.

8. A reversible adhesive polymer composition according to any one of claims 1-7, wherein the oligomer diol has a molecular weight of from 250 g/mol to 10 000 g/mol, more preferably from 600 to 5000 g/mol, even more preferably from 1250 to 2000 g/mol.

9. A reversible adhesive polymer composition according to any one of claims 1-8,
wherein the viscosity of the composition at 60 °C is from 1 to 1000 kPa·s, more preferably from 5 to 500 kPa·s,even more preferably from 10 to 250 kPa·s,and
wherein the viscosity of the composition at 110 °C is from 1 to 500 kPa·s, more preferably from 3 to 250 kPa·s,even more preferably from 5 to 100 kPa·s,and
wherein the viscosity of the composition at 160 °C is from 0.5 to 250 kPa·s, more preferably from 1 to 125 kPa·s,even more preferably from 2 to 50 kPa·s.

10. A reversible adhesive polymer composition according to any one of claims 1-9, wherein the polymer chain further comprises 0.1-1 furan and/or maleimide moieties, preferably 0.11-0.5 furan and/or maleimide moieties, more preferably 0.2-0.3 furan and/or maleimide moieties, wherein the furan and/or maleimide moieties are preferably present as end groups of the polymer chains.

11. A reversible adhesive polymer composition according to claim 10, further comprising
- if the composition comprises maleimide moieties, a difuran crosslinking agent, and/or
- if the composition comprises furan moieties, a bismaleimide crosslinking agent,
wherein the crosslinking agent preferably is aromatic or aliphatic, preferably the crosslinking agent is aliphatic.

12. A reversible adhesive polymer composition according to claim 10 or 11, comprising a crosslinked polymer.

13. A reversible adhesive polymer composition according to any one of claims 1-12, wherein the polymer composition comprises or essentially consists of polymer chains having a structure according to formula (Ia): 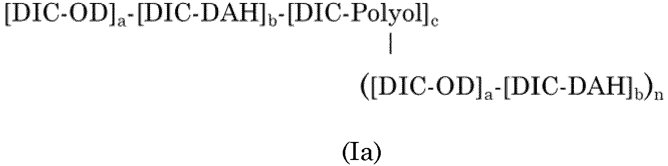
wherein DIC represents a diisocyanate unit, OD represents a oligomer diol unit, DAH represents a dianhydrohexitol unit and polyol represents a polyol unit comprising at least three hydroxyl moieties, wherein a, b and c indicate the relative amounts of the different units, and wherein
all values of a together equal to 3-12, preferably 4-8, more preferably 4-6,
all values of b together equal to 1-5, preferably 1-3, more preferably 1-2,
c is 0.2-0.8, preferably 0.2-0.4, more preferably 0.2-0.3, and
n represents the number of hydroxyl groups in the polyol minus 2.

14. A reversible adhesive polymer composition according to claim 13, wherein the polymer composition comprises or essentially consists of polymer chains having a structure according to formula (IIa): 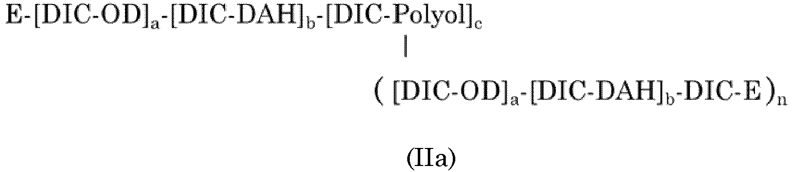
wherein DIC represents a diisocyanate unit, OD represents a oligomer diol unit, DAH represents a dianhydrohexitol unit and polyol represents a polyol unit comprising at least three hydroxyl moieties, wherein a, b and c indicate the relative amounts of the different units, and wherein
all values of a together equal to 3-12, preferably 4-8, more preferably 4-6, all values of b together equal to 1-5, preferably 1-3, more preferably 1-2,
c is 0.2-0.8, preferably 0.2-0.4, more preferably 0.2-0.3,
n represents the number of hydroxyl groups in the polyol minus 2, and
E represents a Diels-Alder moiety end group.

15. An electronic device comprising a reversible adhesive polymer composition according to any one of claims 1-14.

16. Use of a reversible adhesive polymer composition according to any one of claims 1-14 for reversibly adhering components in an electronic device or for reversibly adhering an electronic device to a surface.

17. A method for reversibly adhering at least one component within an electronic device, said method comprising the steps of:
i) adhering the at least one component onto another component withing an electronic device using a reversible adhesive according to the invention, preferably onto a circuitry of the electronic device.
ii) optionally overmoulding the product of step i) with a thermoplastic polymer layer; and
iii) optionally coating the product of steps i) or ii) with one or more cross-linkable plastics or composites.

18. A method for separating elements of an electronic device for improved recyclability or repairability that comprises a reversible adhesive polymer composition according to any one of claims 1-14, comprising at least the steps of:
i) heating the reversible adhesive polymer composition specifically, or the electronic device as a whole, to a temperature at which the reversible adhesive polymer composition substantially softens and preferably exhibits an adhesive strength of < 10 N/cm, more preferably < 5 N/cm, even more preferably < 2 N/cm; and
ii) separating one or more components from the electronic device manually or by machine; and
optionally
iii) placing the separated components in appropriate waste streams or
iv) applying repairing, refurbishment or similar actions to reconstitute defective elements of electronic circuitry, optionally followed by
- re-application of additional reversible adhesive polymer if needed, and/or
- re-application of one or more components.
